# EUROPÄISCHE PATENTSCHRIFT

(11) **EP 2 195 530 B1**
(45) Veröffentlichungstag und Bekanntmachung des Hinweises auf die Patenterteilung: **09.01.2013**
(21) Anmeldenummer: 08801691.0
(22) Anmeldetag: 22.08.2008
(51) Int. Cl.: F03D 11/04

(54) **MASTKONSTRUKTION FÜR FACHWERK-TÜRME VON WINDKRAFTANLAGEN**
POLE CONSTRUCTION FOR FRAMEWORK TOWERS OF WIND POWER PLANTS
STRUCTURE DE MÂT POUR TOURS EN TREILLIS D'ÉOLIENNES

(30) Priorität: 23.08.2007 DE 102007039957
(43) Veröffentlichungstag der Anmeldung: 16.06.2010
(73) Patentinhaber: Ruukki Dortmund GmbH, 44143 Dortmund (DE)
(72) Erfinder: HUESEMANN, Klaus, 32351 Stemwede (DE)
(74) Vertreter: Gerstein, Hans Joachim
(86) Internationale Anmeldenummer: PCT/EP2008/006960
(87) Internationale Veröffentlichungsnummer: WO 2009/024356

(56) Entgegenhaltungen:
- DE-A1-102005 012 817
- DE-C- 542 902
- DE-U1- 8 704 779
- US-A- 1 846 682
- US-A- 4 646 505

## Beschreibung

Die Erfindung betrifft eine Mastkonstruktion für Turmkonstruktionen von Windkraftanlagen mit einer Höhe von mehr als 80 Metern mit Eckstielen aus Teilprofilen, wobei die Eckstiel jeweils aus mindestens zwei Teilprofilen gebildet sind, umfassend ein Teilprofil A und ein Teilprofil I, die nicht stoffschlüssig miteinander verbunden sind, gebildet sind, wobei die Teilprofile zusammen ein geschlossenes Gesamtprofil bilden und Trennfugen des geschlossenen Gesamtprofils so bestimmt sind, dass sie in einer Flucht mit entsprechenden Trennfugen geschlossene Gesamtprofile eines benachbarten mit Streben verbundenen Eckstiels angeordnet sind.

Für die Eckstiele von Fachwerk-Turmkonstruktionen verwendet man in der Regel Winkelprofile. Mit der Höhe der Türme und mit der Größe der auf dem Turm montierten Bauteile (z. B. Windkraftanlagen) steigt die Belastung für die Winkelprofile. In gewissem Grade kann man diesen Belastungen durch den Einsatz von Profilen mit größeren Profilquerschnitten entsprechen. Die Vergrößerung der Profilquerschnitte kann jedoch nicht in beliebigem Maß erfolgen, da die Fertigung von Winkelprofilen fertigungstechnisch begrenzt ist.

Entsprechend der DE 1 882 171 U wird offenbart, mehrere Winkelprofile durch Schweißen zu verbinden, beziehungsweise bereits in der Fertigung ein kreuzförmiges Profil für Eckstiele zu produzieren. Diese Profilgestaltung ist in Bezug auf die erzielten Flächenträgheitsmomente der Eckstielkonstruktion nicht optimal.

Entsprechend der DE 103 08 176 A1 wird vorgeschlagen, Eckstiele aus einem Formstahl zu fertigen, dessen Profil mindestens zwei Flanken aufweist, wobei die Flanken mittels eines Trägers verbunden sind. Ein solcherart gestalteter Gitterturm bietet den Vorteil, dass das Profil der Eckstiele durch das Vorsehen eines zusätzlichen Trägers stärker ausgebildet ist. Dadurch ergeben sich Eckstiele mit einer gegenüber aus Winkelprofilen gefertigten herkömmlichen Eckstielen deutlich verbesserten Knicklänge.

Eine weitere Möglichkeit hohe Türme zu realisieren ist es, die Anzahl der Eckstiele, die im Allgemeinen vier beträgt, zu erhöhen, um die statischen Vorgaben zu erfüllen. Hierbei befinden sich die durch Querverstrebungen verbundenen Schenkel der allgemein verwendeten rechtwinkligen Winkelprofile nicht mehr annähernd in einer Flucht, so dass der Anschluss der Ausfachungsstreben nicht parallel zu den entsprechenden Schenkeln der Winkelprofile erfolgt, was nachteilig ist.

Dieser Problematik begegnet man, indem die Eckstiele aus mehreren Teilprofilen, im Allgemeinen bis zu einer Anzahl von vier, zusammengesetzt werden, wodurch die Querschnittfläche der Eckstiele erhöht wird. Die Konstruktion besteht bei dieser Lösung aber weiterhin aus einer Konstruktion mit vier Eckstielen.

Nachteilig ist, dass die für die Knickstabilität wichtigen Trägheitsradien sehr gering sind, da ein großer Teil der Querschnittfläche der Eckstiele im Schwerpunktbereich liegt.

Entsprechend sind viele Zwischenabstützungen der Eckstiele mittels Verstrebungen notwendig, was den konstruktiven Aufwand erheblich vergrößert.

Auf Grund dieser Problematik existieren Konstruktionen für Fachwerktürme, bei denen Eckstiele und auch die Ausfachung aus Rohren gebildet werden. Hierbei ist die Materialkonzentration im Profil der Eckstiele und im Profil der Ausfachungen in statisch optimaler Anordnung weit von der neutralen Faser des Profiles entfernt. Allerdings sind die Anschlüsse der Ausfachungen und die Stöße der Eckstiele solcher Konstruktionen in der Regel durch Schweißverfahren hergestellt. Geschweißte Anschlüsse sind aufwendig in der Fertigung.

Weiterhin haben Schweißnähte eine hohe Kerbwirkung, weshalb sie für dynamisch beanspruchte Türme wie bei Windkraftanlagen stark überdimensioniert werden müssen und daher kaum in Frage kommen.

Insbesondere vor dem Hintergrund neuer Generationen von Windkraftanlagen, deren Nabenhöhen über 80 Meter betragen und/oder deren Leistung über 2 Megawatt beträgt, sind auf Grund der hohen statischen und dynamischen Belastung der Turmkonstruktionen neue Ansätze für die Gestaltung der Fachwerkkonstruktion entwickelt worden.

In der EP 1 442 807 wird ein im Hinblick auf den Materialeinsatz und Montage optimiertes Eckstielprofil erläutert. Hierbei wird ein handelsübliches I-Profil, welches einen Mittelsteg und Gurte aufweist und das Profil in der Fachwelt unter der Bezeichnung "Peiner-Träger" bekannt ist, nach dem Walzprozess der Profilherstellung in eine neue Form gebracht, so dass die Gurte einen Winkel von 90° miteinander einschließen. Das so erzeugte neue Profil kann dabei offen oder geschlossen sein. Im letzteren Fall werden die Gurte an der Kontaktlinie miteinander verschweißt.

Diese Fertigung der neuen Profile entsprechend der EP 1 442 807 ist aufwendig, da nach dem Walzen des I-Profiles ein weiterer Fertigungsprozess notwendig ist.

Vorteil der vorgenannten Konstruktion gegenüber Winkelprofilen ist die große Querschnittfläche, die mit nur einem Profil erreichbar ist, sowie der gegenüber Winkelkonstruktionen größere Trägheitsradius. Nachteilig ist, dass der Trägheitsradius gegenüber einem vergleichbaren Rohr wesentlich (etwa Faktor 1,4) kleiner ist, und dass Verstrebungen der Eckstiele die Kräfte nicht in Richtung des Schwerpunkts des Profiles einleiten, so dass die Eckstiele tordiert werden.

Einen anderen Ansatz zur Realisierung von Eckstielen mit einem geschlossenen Profil stellt die in der DE 102005012817 A1 offenbarte Verwendung eines aus zwei offenen Teilprofilen bestehenden - in montiertem Zustand geschlossenen - achteckigen Profiles dar. Der Querschnitt des montierten Profils entspricht nahezu dem eines Rohres. Die Teilprofile werden verschraubt. Die Streben werden mittels Anschlussblechen zwischen den Teilprofilen montiert, so dass auftretende Kräfte durch die Streben nahezu zentrisch in den durch die verschraubten Teilprofile gebildeten Eckstiel eingeleitet werden. Durch die Montage der Anschlussbleche ergibt sich ein Spalt zwischen den verschraubten Teilprofilen. Damit das montierte Profil in den statischen Eigenschaften einem geschlossenen Profil entspricht, sind unter anderem deshalb ggf. weitere Verschraubungen der Teilprofile zwischen den Streben notwendig. An diesen zusätzlichen Verschraubungen wird zwischen den Teilprofilen ein Distanzelement angeordnet, welches als Bindeblech bezeichnet wird. Der notwendige Abstand der zusätzlichen Verschraubungen und somit die Anzahl der notwendigen Bindebleche ergibt sich aus der Knickstabilität der Profilhälfte mit dem geringerem Flächenträgheitsmoment. In der US 4 646 505 wird ein dreieckiges Profil dargestellt.

Weiterhin ergibt sich aus den geometrischen Bedingungen des Anschlusses der Streben, dass die Annäherung des Eckstielprofils an die statisch günstige Rohrform, zu Teilprofilen mit sehr unterschiedlichem Flächenträgheitsmoment führt.

Bei einem Turm mit z. B. vier Eckstielen der vorgenannten Konstruktion ergibt sich für das äußere Blech des Eckstieles ein Winkel von ca. 270°. Für das innere Blech ergibt sich entsprechend ein Winkel von ca. 90°. In diesem Falle ergibt sich für das innere Blech ein im Verhältnis zum äußeren Blech geringeres Flächenträgheitsmoment, woraus eine erhebliche Anzahl zusätzlicher Verschraubungen und Bindbleche zwischen den Strebenanschlüssen resultiert. Da die Verschraubungen regelmäßig überprüft werden müssen, ergeben sich entsprechende Kosten, die von der Anzahl der verwendeten Bindebleche abhängen.

Bei der Herstellung der Profile hat sich zudem herausgestellt, dass die Fertigung geschlossener achteckiger Profile fertigungstechnisch aufwendig ist.

Die Aufgabe der Erfindung ist es, eine Konstruktion eines Eckstiels eines Gittermasten zur Verfügung zu stellen bei der die durch angeschlossene Streben übertragene Kräfte nahezu zentrisch in den Eckstiel eingeleitet werden und wobei der Eckstiel ein nahezu gleiches Flächenträgheitsmoment um beide Hauptachsen aufweist und die Konstruktion einfacher als eine Konstruktion aus achteckigen Eckstielprofilen zu fertigen ist und bei dem die Anzahl notwendiger Bindebleche zwischen den Teilprofilen eines Eckstieles im Vergleich zu der in der DE 102005012817 offenbarten Lösung minimiert und/oder der Materialverbrauch für die Eckstiele von Gittermastkonstruktionen verringert wird.

Die Aufgabe wird durch die Mastkonstruktion mit den Merkmalen des Anspruchs 1 gelöst. Vorteilhafte Ausgestaltungen sind in den Unteransprüchen beschrieben.

Für einen optimalen Materialeinsatz bei der konstruktiven Gestaltung von Gesamtprofilen ist es von zentraler Bedeutung, die durch die Streben übertragenen Kräfte mittig in den Eckstiel einzuleiten und auch das geringste Flächenträgheitsmoment des Gesamtprofils zu maximieren. Bei aus Teilprofilen gebildeten geschlossenen Gesamtprofilen ist das geringste Flächenträgheitsmoment des Gesamtprofils Grundlage der Dimensionierung. Die Teilprofile weisen ebenfalls jeweils ein maximales und ein minimales Flächenträgheitsmoment auf.

Grundgedanke der Lösung ist es, für die Konstruktion eines Eckstieles eines Gittermasten, mindestens ein Teilprofil A und ein Teilprofil 1 zu verwenden, die zu einem Gesamtprofil montiert ein Eckstielsegment bilden, und wobei eine Innenkontur, die durch die Verbindung der drei inneren Eckpunkte des Gesamtprofils gebildet wird, nahezu die Form eines Dreieckes aufweist und die Außenkontur des Gesamtprofils Anschlussbereiche für Anschlussbleche an denen Streben des Gittermasten befestigt sind, aufweist.

Überraschenderweise entsprechen der Trägheitsradius und die Knickstabilität eines geometrischen Querschnittes des Gesamtprofils nahezu einem Rohr gleicher Querschnittsfläche, das bekanntermaßen das mögliche Optimum an Knickstabilität bietet. Die hohe Stabilität des Gesamtprofils resultiert unter anderem wesentlich aus der versteifenden Wirkung der nahezu rechtwinkligen abgekanteten Anschlussbereiche der Teilprofile. Überdies erzielt man durch die spezifische Form des Teilprofils I eine Optimierung des minimalen Trägheitsmomentes der Hauptachsen des Profils.

Die Erfindung wird nachfolgend anhand einer besonders bevorzugten Ausführungsform der Erfindung näher erläutert, wobei folgende Zeichnungen zur Erläuterung beigefügt sind:
- Figur 1:: Teilschnittansicht eines Gesamtprofils mit Anschlussblechen und Streben
- Figur 2:: Horizontaler Schnitt durch eine Turmkonstruktion mit acht Eckstielen (schematisch);
- Figur 3:: vertikale Anordnung von aus Gesamtprofilen bestehenden Eckstielsegmenten eines Eckstieles;
- Figur 4:: Beispielhafte Ausführung eines Gesamtprofils mit einem Teilprofil A und einem Teilprofil mit Anschlussbereichen;
- Figur 5:: Ansicht des Gesamtprofils mit der Innenkontur eines Dreiecks, welches die Winkel Alpha, Beta und Gamma verbindet.

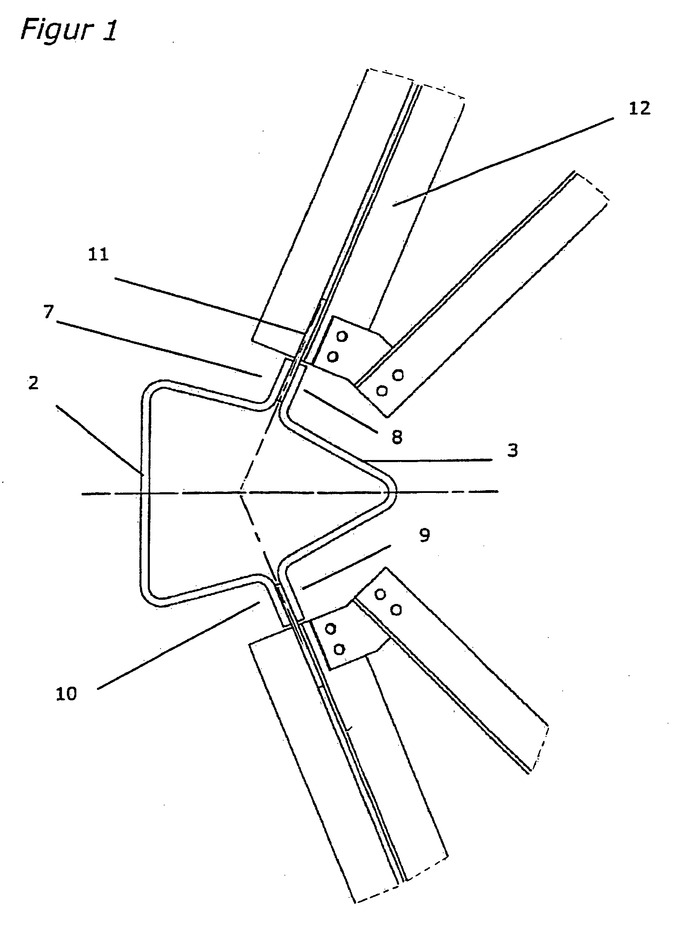

Figur 1 lässt ein Gesamtprofil eines Eckstiels 1 erkennen, das aus einem ersten Teilprofil I 3 und einem zweiten Teilprofil A 2 gebildet ist, die nicht stoffschlüssig miteinander beispielsweise durch Verschrauben oder Vernieten verbunden sind. Erkennbar ist, dass das erste Teilprofil I 3 im Mittelstück einfach etwa in der Mitte über eine Längskante abgewinkelt ist und an den im Querschnitt gesehen freien Enden Anschlussbereiche 8, 9 aufweist, die ebenfalls abgekantet sind.

Das zweite Teilprofil A 2 ist im Mittelstück zweifach, d. h. über zwei Längskanten abgewinkelt und weist ebenfalls abgekantete Anschlussbereiche 7, 10 an den sich gegenüberliegenden freien Endkanten auf.

In die Verbindungsstellen der Teilprofile 2, 3 sind zwischen den zusammengefügten Anschlussbereichen 7, 8 und 9, 10 Anschlussbleche 11 für Streben 12 angebracht, die geschlossene Gesamtprofile benachbarte Eckstiele 1 miteinander verbinden, um so eine Fachwerk-Turmkonstruktion herzustellen.

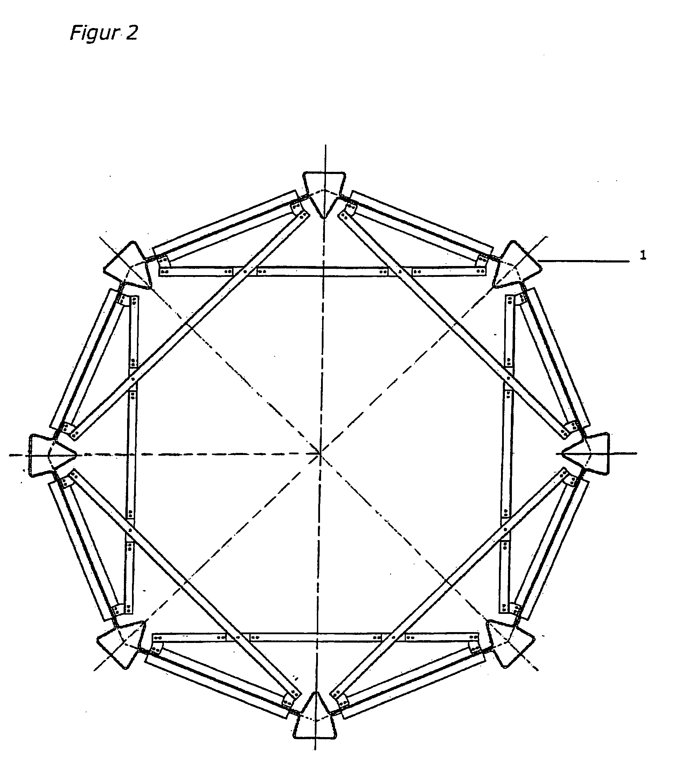

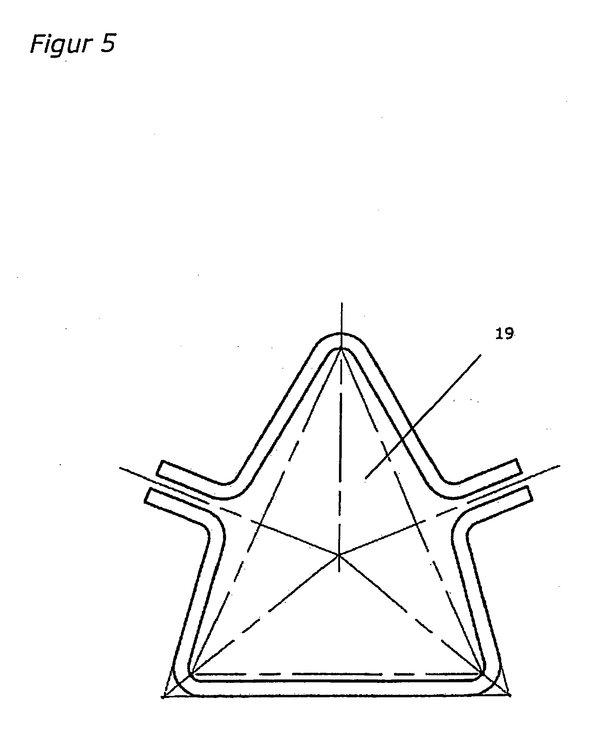

Bei dem erfindungsgemäßen Ausführungsbeispiel entsprechend Figur 2 weist der Gittermast acht Eckstiele auf. Diese Eckstiele bestehen in der Längsrichtung aus Teilprofilen, welche aus jeweils zwei vorzugsweise gekanteten Blechen gebildet werden. Wird das Teilprofil I 3 mit dem Teilprofil A 2 montiert, weist das so entstehende Gesamtprofil einen Querschnitt auf, der nahezu dem eines Dreieckes entspricht, wie in der Figur 5 erkennbar ist.

Die Montage der Konstruktion erfolgt durch Schraubverbindungen, vorzugsweise am Ort des Bauwerkes. Um die Zugänglichkeit zur Verschraubung der Profilhärte zu gewährleisten sind in den Teilprofilen nicht gezeigte Handlöcher vorgesehen. Schweißarbeiten sind deshalb im Allgemeinen nicht notwendig.

Aus fertigungstechnischen Gründen, insbesondere wegen Klemmungen bei dem Kantvorgang des Teilprofils I 3, ist es in der Regel vorteilhaft den Winkel Alpha größer als 60° festzulegen.

In Figur 2 sei die dargestellte Konstruktion ein Gittermast mit acht Eckstielen 1 und einer Höhe des Gittermasten von 120 Metern. Auf dem Gittermast sei eine Windturbine mit einer Leistung von 2 MW angeordnet.

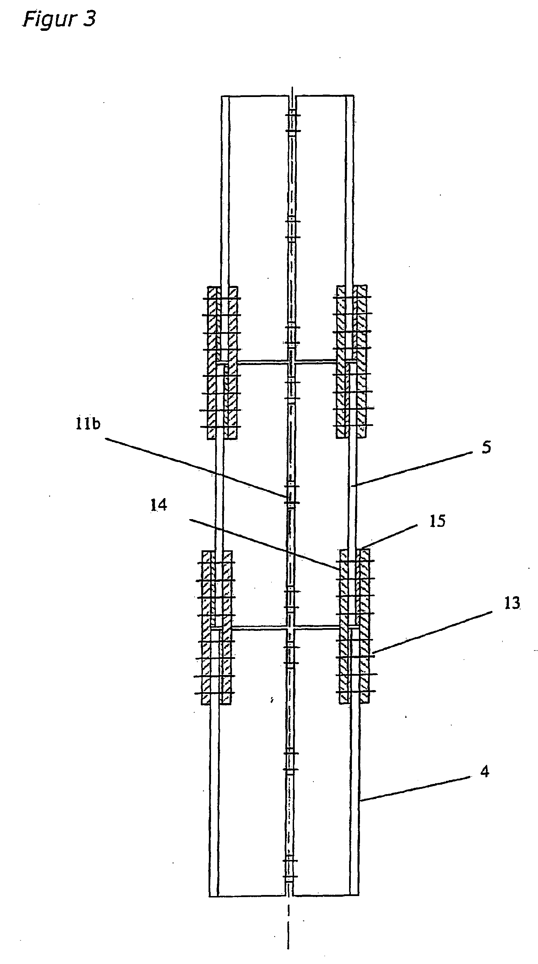

Figur 3 lässt eine vertikale Anordnung von aus Gesamtprofilen bestehenden Eckstielsegmenten 4, 5 eines Eckstieles 1 erkennen, wobei ein oberes Segment 5 gegenüber einem unteren Segment 4 einen geringeren Querschnitt aufweist. Die Eckstielsegmente 4, 5 sind mittels Stoßblechen 13, 15 miteinander verbunden. Um eine kraftschlüssige Verbindung durch z. B. Verschraubung oder Vernietung zu ermöglichen können Distanzen zwischen den vertikal angeordneten und mit Stoßblechen 13, 14 verschraubten Gesamtprofilen mittels Futterblechen 15 ausgeglichen werden, die zwischen ein Eckstielsegment 4, 5 und ein Stoßblech 13, 14 gelegt werden.

An die Verbindung zwischen den Teilprofilen können Bindebleche 11b angeordnet sein.

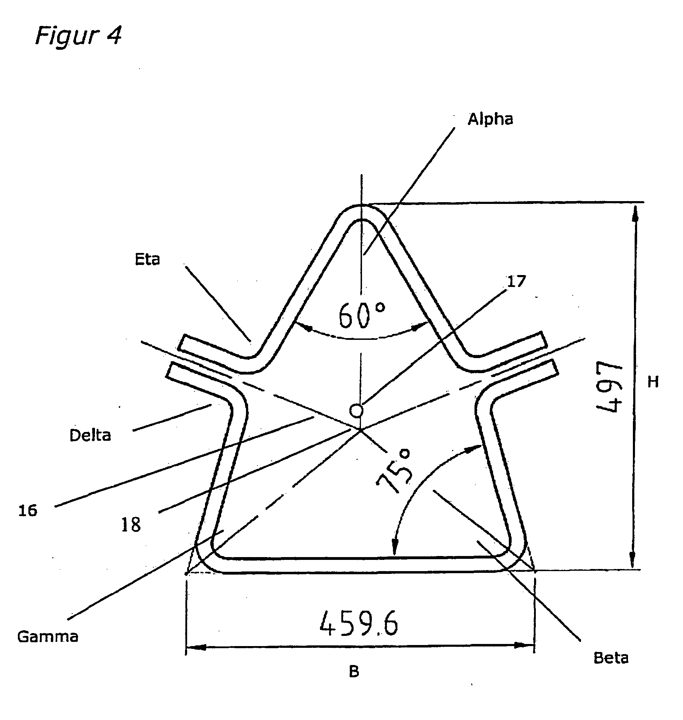

Im mittleren Höhensegment der Turmkonstruktion wird ein Gesamtprofil entsprechend der Figur 4 verwendet. Das für die Gesamtprofile verwendete Material ist ein Baustahl der Qualität S 355 mit einer Länge von 12 Metern und einer Materialstärke von 14 Millimetern. Bei einer Profilhöhe H von 497 Millimetern und einer Profilbreite B von 459,6 Millimetern ergeben sich für die erfindungsgemäßen Profile folgende Flächenträgheitsmomente:
Teilprofil I
   max = 224438000 mm⁴
   min = 67437500 mm⁴
Teilprofil A
   max = 594600000 mm⁴
   min = 204187000 mm⁴
Gesamtprofil
   max = 825446000 mm⁴
   min = 819038000 mm⁴

Dabei weist das Teilprofil I 3 einen Winkel Alpha von 60 Grad auf. Das Teilprofil A 2 weist zwei Winkel Beta und Gamma zu je 75 Grad auf. Die Anschlussbereiche der Teilprofile 7, 8, 9, 10 sind nahezu rechtwinklig abgekantet, so dass die jeweils gegenüberliegenden Anschlussbereiche 7 und 8 sowie 9 und 10 parallel zueinander ausgerichtet sind.

Die abgewinkelten Anschlussbereiche weisen eine Länge auf, die zum einen die Montage der Anschlussstücke ermöglicht und zum anderen danach ausgelegt ist, die notwendige Versteifung des Profils zu gewährleisten.

Der Schwerpunkt 17 des Flächenträgheitsmomentes liegt 16,93 mm über dem Schnittpunkt der Symmetrielinien 16.

Ein besonders vorteilhafter Aspekt dieser Konstruktion ist, dass sich im montierten Zustand ein nahezu geschlossenes Profil des Eckstiels ergibt, wobei die Flächenträgheitsmomente der Hauptachsen nahezu identisch sind.

Die Verbindung der Streben mit dem Gesamtprofil erfolgt über Anschlussbleche 11, die zwischen den Teilprofilen des Gesamtprofils angeordnet sind. Durch die somit auf das Zentrum des Eckstieles gerichtete Krafteinleitung werden Biegemomente und Torsionen der Eckstiele gegenüber herkömmlichen Eckstielkonstruktionen, wie z. B. Eckstielkonstruktionen aus Winkeleisen verringert.

Durch die Montage der Anschlussbleche 11 zum Anschluss der Streben 12 ergibt sich ein Spalt zwischen den verschraubten Teilprofilen.

Damit das montierte Profil in den statischen Eigenschaften einem geschlossenen Profil entspricht sind unter anderem deshalb ggf. weitere Verschraubungen der Teilprofile zwischen den Streben notwendig. An den zusätzlichen Verschraubungen werden zwischen den Teilprofilen Bindebleche 11b angeordnet.

Der notwendige Abstand der zusätzlichen Verschraubungen und somit die Anzahl der notwendigen Bindebleche 11b verringert sich gegenüber Eckstielkonstruktionen aus Achteck-Teilprofilen.

Die Gesamtprofile des Eckstieles bilden Eckstielsegmente 4, 5. Die Eckstielsegmente 4, 5 werden in vertikaler Richtung zueinander angeordnet und mittels Stossblechen 13, 14 verbunden. In der Regel ist in höheren Segmenten von Turmbauwerken eine geringere statische und dynamische Belastung vorhanden als in unteren Segmenten von Turmbauwerken. Eine besonders vorteilhafte Ausgestaltung der Gesamtprofile ergibt sich durch eine Variation der Materialstärke und/oder durch die Variation der Profilgeometrie wie z. B. der Breite und der Höhe des Dreiecksquerschnittes des Gesamtprofils. Das ermöglicht, den Materialverbrauch an Profilwerkstoff zu minimieren. Insbesondere ist in diesem Zusammenhang die Verwendung von Feinkornbaustahl vorteilhaft, da aus diesem jeweiligen Teilprofile exakt auf die statischen Anforderungen hin gefertigt werden können.

Aus dieser Optimierung resultiert in höheren Segmenten von erfindungsgemäß gestalteten Turmbauwerken in der Regel ein geringerer Gesamtprofilquerschnitt als in den niedrigeren Segmenten. Ergeben sich dadurch Distanzen zwischen den vertikal angeordneten und mit Stoßblechen 13, 14 verschraubten Gesamtprofilen, können Futterbleche 15 verwendet, um eine kraftschlüssige Verbindung durch z. B. Verschraubung zu ermöglichen.

Erfindungsgemäß ist auch der Fall, dass die Materialstärke unter Eckstielsegmente, geringer ist, als die Materialstärke oberer Eckstielsegmente. Dies ist z. B. von der jeweiligen Spreizung der Eckstiele abhängig.

In einer weiteren vorteilhaften Ausgestaltung der Erfindung wird wenigstens ein Teil der Profile aus nichtmetallischen Materialien z. B. laminierten Carbonfasern gefertigt, um Gewichtseinsparungen zu erzielen und/oder den Materialverbrauch an metallischen Baumaterialien zu verringern.

## Patentansprüche

1. Mastkonstruktion für Fachwerk-Türme von Windkraftanlagen mit einer Höhe von mehr als 80 Metern mit Eckstiele (1), die jeweils aus mindestens zwei Teilprofilen umfassend ein Teilprofil A (2) und ein Teilprofil I (3), die nicht stoffschlüssig miteinander verbunden sind, gebildet sind, wobei die Teilprofile zusammen ein geschlossenes Gesamtprofil bilden und Trennfugen des geschlossenen Gesamtprofils so bestimmt sind, dass sie einer Flucht mit entsprechenden Trennfugen geschlossener Gesamtprofile eines benachbarten, mit Streben (11) verbundenen Eckstiels (1) angeordnet sind, **dadurch gekennzeichnet, dass** das Teilprofil I (3) im Querschnitt über eine Längskante mit einem Winkel Alpha zwischen 50° und 70°, vorzugsweise 60° abgewinkelt ist und das Teilprofil A (2) im Querschnitt über zwei Längskanten mit einem Winkel Beta und einem Winkel Gamma von jeweils 60° bis 90°, vorzugsweise 75°, abgewinkelt ist und dass die durch die direkte Verbindung der Winkel Alpha, Beta und Gamma gebildete Innenkontur (19) des zusammengesetzten Gesamtprofils eines Eckstiels (1) ein Dreieck bildet und die Summe der Winkel Alpha, Beta und Gamma zwischen 170° und 250° beträgt.

2. Mastkonstruktion nach Anspruch 1, **dadurch gekennzeichnet, dass** das Teilprofil I (3) und das Teilprofil A (2) Anschlussbereiche (7, 8, 9, 10) aufweisen, die in Winkeln Delta für das Teilprofil I (3) und Eta für das Teilprofil A (2) abgekantet sind, so dass die jeweils gegenüberliegenden Anschlussbereiche (7 und 8 sowie 9 und 10) parallel zueinander ausgerichtet und der Winkel Delta für das Teilprofil I (3) zwischen 80° und 110°, vorzugsweise 97,5°, und der Winkel Eta für das Teilprofil A (2) zwischen 80° und 110°, vorzugsweise 97,5°, beträgt.

3. Mastkonstruktion nach einem der vorherigen Ansprüche, **dadurch gekennzeichnet, dass** Anschlussbereiche (7, 8, 9, 10) zur Verbindung der Teilprofile eine Länge aufweisen, die dem 3- bis 10-fachen, vorzugsweise dem 4-fachen der Materialstärke des jeweiligen Teilprofils entsprechen.

4. Mastkonstruktion nach einem der vorherigen Ansprüche, **dadurch gekennzeichnet, dass** das Gesamtprofil eines Eckstiels (1) im montierten Zustand ein annähernd gleiches Flächenträgheitsmoment um beide Hauptachsen des Gesamtprofils aufweist.

5. Mastkonstruktion nach einem der vorherigen Ansprüche, **dadurch gekennzeichnet, dass** die Längsachsen (16) auf einer Höhe an ein Gesamtprofil eines Eckstiels (1) angeschlossener Streben sich in einem Punkt (18) treffen und der Schwerpunkt (17) des Gesamtprofils sich in einem Radius von 0 bis 40 mm, vorzugsweise in einem Radius von 20 mm, um den Punkt (18) befindet.

6. Mastkonstruktion nach einem der vorherigen Ansprüche, **dadurch gekennzeichnet, dass** untere Eckstielsegmente (4) der Mastkonstruktion Teilprofile mit einer anderen Materialstärke als mindestens einem oberhalb der unteren Eckstielsegmente (4) angeordnetes Eckstielsegment (5) aufweisen.

7. Mastkonstruktion nach einem der vorherigen Ansprüche, **dadurch gekennzeichnet, dass** mindestens ein Teilprofil der Eckstielkonstruktion aus einem Feinkornstahl besteht.

8. Mastkonstruktion nach einem der vorherigen Ansprüche, **dadurch gekennzeichnet, dass** die Teilprofile (2, 3) und/oder die Streben (12) zumindest teilweise aus nicht-metallischen Materialien, beispielsweise laminierte Carbonfasern, bestehen.

9. Mastkonstruktion nach einem der vorherigen Ansprüche, **dadurch gekennzeichnet, dass** die Teilprofile (2, 3) und/oder die Streben (12) zumindest teilweise aus faserhaltigen Naturmaterialien gebildet sind.

## Claims

1. A mast structure for framework towers of wind power installations having a height of more than 80 meters with corner posts (1) which are each formed from at least two sub-profiles comprising a sub-profile A (2) and a sub-profile I (3) which are not integrally conntected to one another, wherein the sub-profiles together form a closed overall profile and separating joints of the closed overall profile are established such that they are arranged aligned with corresponding separating joints of closed overall profiles of an adjacent corner post (1) which is connected to struts (11), **characterized in that** the sub-profile I (3) is angled in the cross section over a longitudinal edge with an angle alpha between 50° and 70°, preferably 60°, and the sub-profile A (2) is angled in the cross section over two longitudinal edges with an angle beta and an angle gamma, each of 60° to 90°, preferably 75°, and **in that** the internal contour (19) which is formed by the direct connection of the angles alpha, beta and gamma, of the assembled overall profile of a corner post (1) forms a triangle, and the sum of the angles alpha, beta and gamma is between 170° and 250°.

2. The mast structure as claimed in claim 1, **characterized in that** the sub-profile I (3) and the sub-profile A (2) have connecting areas (7, 8, 9, 10) which are angled at angles delta for the sub-profile I (3) and eta for the sub-profile A (2), such that the respectively opposite connecting areas (7 and 8 as well as 9 and 10) are aligned parallel to one another, and the angle delta for the sub-profile I (3) is between 80° and 110°, preferably 97.5°, and the angle eta for the sub-profile A (2) is between 80° and 110°, preferably 97.5°.

3. The mast structure as claimed in one of the preceding claims, **characterized in that** connecting areas (7, 8, 9, 10) for connection of the sub-profiles have a length which corresponds to 3 to 10 times, preferably to 4 times, the material thickness of the respective sub-profile.

4. The mast structure as claimed in one of the preceding claims, **characterized in that** the overall profile of a corner post (1) in the fitted state has an approximately equal area moment of inertia about both major axes of the overall profile.

5. The mast structure as claimed in one of the preceding claims, **characterized in that** the longitudinal axes (16) meet at one point (18) on struts which are connected at one height to an overall profile of a corner post (1), and the center of gravity (17) of the overall profile is located at a radius of 0 to 40 mm, preferably at a radius of 20 mm, around the point (18).

6. The mast structure as claimed in one of the preceding claims, **characterized in that** lower corner post segments (4) of the mast structure have sub-profiles with a different material thickness than at least one corner post segment (5) which is arranged above the lower corner post segments (4).

7. The mast structure as claimed in one of the preceding claims, **characterized in that** at least one sub-profile of the corner post structure is composed of fine-grain steel.

8. The mast structure as claimed in one of the preceding claims, **characterized in that** the sub-profiles (2, 3) and/or the struts (12) are composed at least partially of non-metallic materials, for example laminated carbon fibers.

9. The mast structure as claimed in one of the preceding claims, **characterized in that** the sub-profiles (2, 3) and/or the struts (12) are formed at least partially from natural materials containing fibers.

## Revendications

1. Construction de mât pour tours en treillis d'éoliennes, d'une hauteur de plus de 80 mètres avec des poteaux de coin (1) formés chacun d'au moins deux profilés partiels comprenant un profilé partiel A (2) et un profilé partiel I (3), qui ne sont pas reliés l'un à l'autre par engagement par liaison de matière, les profilés partiels formant ensemble un profilé global fermé et des joints de séparation du profilé global fermé étant réalisés de telle sorte qu'ils soient disposés de manière alignée avec des joints de séparation correspondants de profilés globaux fermés d'un poteau de coin adjacent (1) connecté par des entretoises (11), **caractérisée en ce que** le profilé partiel I (3) est incliné en section transversale sur un bord longitudinal suivant un angle alpha compris entre 50° et 70°, de préférence de 60°, et le profilé partiel A (2) est incliné en section transversale sur deux bords longitudinaux suivant un angle bêta et un angle gamma de respectivement 60° à 90°, de préférence de 75°, et **en ce que** le contour intérieur (19) formé par la connexion directe des angles alpha, bêta et gamma, du profilé global assemblé d'un poteau de coin (1) formant un triangle et la somme des angles alpha, bêta et gamma étant comprise entre 170° et 250°.

2. Construction de mât selon la revendication 1, **caractérisée en ce que** le profilé partiel 1 (3) et le profilé partiel A (2) présentent des régions de raccordement (7, 8, 9, 10) qui sont inclinées suivant des angles delta pour le profilé partiel I (3) et êta pour le profilé partiel A (2), de sorte que les régions de raccordement opposées respectives (7 et 8, ainsi que 9 et 10) soient orientées parallèlement les unes aux autres et que l'angle delta pour le profilé partiel I (3) soit compris entre 80° et 110°, de préférence soit de 97,5°, et que l'angle êta pour le profilé partiel A (2) soit compris entre 80° et 110°, de préférence soit de 97,5°.

3. Construction de mât selon l'une quelconque des revendications précédentes, **caractérisée en ce que** les régions de raccordement (7, 8, 9, 10) pour la connexion des profilés partiels présentent une longueur qui correspond à 3 fois à 10 fois, de préférence à 4 fois, l'épaisseur de matériau du profilé partiel respectif.

4. Construction de mât selon l'une quelconque des revendications précédentes, **caractérisée en ce que** le profilé global d'un poteau de coin (1) dans l'état monté présente une couple d'inertie de surface approximativement égal autour des deux axes majeurs du profilé global.

5. Construction de mât selon l'une quelconque des revendications précédentes, **caractérisée en ce que** les axes longitudinaux (16) d'entretoises raccordées à une hauteur à un profilé global d'un poteau de coin (1) se rejoignent en un point (18) et le centre de gravité (17) du profilé global se trouve dans un rayon de 0 à 40 mm, de préférence dans un rayon de 20 mm, autour du point (18).

6. Construction de mât selon l'une quelconque des revendications précédentes, **caractérisée en ce que** des segments de poteau de coin inférieurs (4) de la construction de mât présentent des profilés partiels ayant une épaisseur de matériau différente de celle d'au moins un segment de poteau de coin (5) disposé au-dessus du segment de poteau de coin inférieur (4).

7. Construction de mât selon l'une quelconque des revendications précédentes, **caractérisée en ce qu'**au moins un profilé partiel de la construction de poteau de coin se compose d'un acier à grain fin.

8. Construction de mât selon l'une quelconque des revendications précédentes, **caractérisée en ce que** les profilés partiels (2, 3) et/ou les entretoises (12) se composent au moins en partie de matériaux non métalliques, par exemple de fibres de carbone laminées.

9. Construction de mât selon l'une quelconque des revendications précédentes, **caractérisée en ce que** les profilés partiels (2, 3) et/ou les entretoises (12) sont formés au moins en partie à partir de matériaux naturels fibreux.
